# EUROPEAN PATENT SPECIFICATION

(11) **EP 2 352 769 B1**
(45) Date of publication and mention of the grant of the patent: **01.05.2013**
(21) Application number: 09752085.2
(22) Date of filing: 11.11.2009
(51) Int. Cl.: C08F 4/6592, C08F 10/00, H01B 3/44

(54) **MEDIUM VOLTAGE CABLE SHEATH COMPRISING AN OLEFIN-BASED POLYMER**
UMMANTELUNG MIT EINEM OLEFINBASIERTEM POLYMER FÜR EIN MITTELSPANNUNGSKABEL
GAINE DE CÂBLE MOYENNE TENSION COMPRENANT UN POLYMÈRE À BASE D'OLÉFINE

(30) Priority: 21.11.2008 US 116701 P
(43) Date of publication of application: 10.08.2011
(73) Proprietor: Dow Global Technologies LLC, Midland, MI 48674 (US)
(72) Inventor: DENTON, David, Angleton TX 77515 (US); MARTIN, Sarah, L., Imperial MO 63052 (US)
(74) Representative: Hayes, Adrian Chetwynd
(86) International application number: PCT/US2009/064005
(87) International publication number: WO 2010/059474

(56) References cited:
- EP-A1- 0 893 801
- WO-A1-00/26268
- WO-A2-2008/112965
- US-A1- 2003 088 037

## Description

### FIELD OF THE INVENTION

The invention relates to a medium voltage cable sheath, e.g., an insulation layer, comprising an olefin-based polymer made with a constrained geometry catalyst (CGC) activated with a boron-containing cocatalyst and aluminium-containing cocatalyst in which the olefin-based polymer comprises residual boron and aluminium atoms at a molar ratio of boron to aluminium of less than 1.

### BACKGROUND OF THE INVENTION

Olefin-based polymers, also known as polyolefins, e.g., ethylene/α-olefin copolymers, can be made by a myriad of different catalytic processes, e.g., Ziegler-Natta, metallocene and CGC. The structure and properties of polyolefins made by the various catalytic processes will vary with the process by which they are made. Ethylene/α-olefin copolymers made by metallocene or constrained geometry (CG) catalysis are well known in the art, e.g., USP 5,055,438, 5,272,236, 5,278,272. Metallocene and CG catalysts are single-site catalysts, i.e., they typically comprise a single metal atom, e.g., a transition metal such as titanium, hafnium or zirconium, complexed with a cyclopentadienyl ring or similar ligand, e.g., dicyclopentadienyl, indenyl (one in the case of a CGC and two or more in the case of a metallocene). These catalysts produce homogeneous copolymers, i.e., copolymers in which essentially each copolymer molecule of the bulk polymer comprises essentially the same relative amount of comonomer to ethylene, and the comonomer is randomly distributed within the copolymer molecule. These catalysts also produce polymers with a narrow molecular weight distribution (MWD), e.g., 2-4 (as compared with copolymers produced with a multiple-site catalyst such as a Ziegler-Natta catalyst; such copolymers are typically heterogeneous and have a relatively broad MWD, e.g., greater than 4). In addition, a CGC will produce, under the appropriate conditions, polyolefin interpolymers that exhibit, among other things, long chain branching (LCB). This, in turn, imparts various desirable properties to the interpolymers, e.g., high melt elasticity, exceptionally good processability while maintaining good mechanical properties, and the absence or near absence of melt fracture over a broad range of shear stress conditions. These properties lend the copolymers to a broad spectrum of end-use applications including as a sheathing material, e.g., an insulation layer, for cable. However, the dielectric properties of these copolymers are such that their use has been confined to low voltage applications.

WO-A-2004/037909 relates to olefinic interpolymer compositions comprising an olefinic interpolymer, prepared from CGC/FAB/MMAO. The dissipation factor of the polymer is lowered by the addition of a charge dissipation modifier. Wire and cable products containing these olefinic interpolymer compositions are also disclosed.

Single-site catalyst systems typically comprise at least two components, i.e., a metal coordination complex or precursor and one or more activating cocatalysts. The metal coordination complex typically comprises (a) an atom of titanium, hafnium or zirconium, and (b) a mono- or dicyclopentadienyl or indenyl ligand. For CGCs, the two structures ((a) and (b)) are complexed with one another through an internal constrain-inducing ring structure. The activating cocatalyst typically is a neutral Lewis acid, e.g., tris(pentafluorophenyl)borane which is a fluorinated aryl borane or FAB, and/or a polymeric or oligomeric aluminoxane, e.g., modified methyl aluminoxane (MMAO). The aluminoxane also acts as an impurity scavenger. The relatively poor dielectric properties, e.g., dissipation factor, exhibited by ethylene/α-olefin interpolymers made with CGC system have been commonly attributed to the residual catalyst components in the copolymer. Accordingly, such copolymers have long been considered unsuitable for use as a sheath for medium voltage cable, and thus a need exists for new polymers that are suitable for use as sheaths for medium voltage cable.

### SUMMARY OF THE INVENTION

According to this invention, olefin-based interpolymers that are (A) made with a single-site catalyst that is activated with a boron-containing cocatalyst and aluminium-containing cocatalyst, and (B) comprise residual boron and aluminium at a B:Al molar ratio of less than one, are useful in the manufacture of medium voltage cable sheaths. Such olefin-based interpolymers exhibit good dielectric properties, e.g., a dissipation factor less than 0.05 radian as measured at 130°C by ASTM D-150-98 (Re-approved 2004) Standard Test Methods for AC Loss Characteristics and Permittivity (Dielectric Constant) of Solid Electrical Insulation.

The residual boron and aluminium are the boron and aluminium that remains in the interpolymer after the polymerization process and that is not removed by any post-polymerization purification process. This is the boron and aluminum content of the interpolymer at the time the interpolymer is used to fabricate a medium voltage cable sheath.

An olefin-based polymer is known that has the following properties: (A) made with a single-site catalyst that is activated with a boron-containing cocatalyst and aluminum-containing cocatalyst, and (B) comprises residual boron and aluminum at a B:Al molar ratio of less than one. The interpolymer can be an ethylene/α-olefin copolymer. The α-olefin can be at least one of propylene 1-butene, 1-hexene and 1-octene, The interpolymer can be an ethylene/α-olefin/diene terpolymer. The α-olefin of the terpolymer can be propylene, and the diene of the terpolymer can be 5-ethylidene-2-norbornene (ENB). An olefin-based polymer can be made by a process comprising the step of contacting one or more olefins under polymerization conditions with a single-site catalyst system comprising (1) a metal coordination complex, (2) a boron-containing activating cocatalyst, and (3) an aluminum-containing activating cocatalyst, the two cocatalysts present in an amount such that the boron and aluminum are present at a B:Al molar ratio of less than one. In another embodiment, the invention is the olefin-based interpolymer made by the process. In one embodiment the interpolymer is an ethylene/α-olefin copolymer. In one embodiment, the α-olefin is at least one of propylene, 1-butene, 1-hexene and 1-octene. In one embodiment, the interpolymer is an ethylene/α-olefin/diene terpolymer. In one embodiment, the α-olefin of the terpolymer is propylene, and in one embodiment, the diene of the terpolymer is 5-ethylidene-2-norbornene (ENB).

In one embodiment, the invention is a medium voltage cable comprising a sheath, the sheath comprising an olefin-based polymer made with a constrained geometry catalyst (CGC) system in which the olefin-based polymer comprises residual boron and aluminum atoms at a molar ratio of boron to aluminum of less than 1. Preferably, the olefin-based interpolymer is an ethylene interpolymer, more preferably a homogeneously branched, substantially linear ethylene interpolymer. In one embodiment the interpolymer is an ethylene/α-olefin copolymer. In one embodiment, the α-olefin is at least one of propylene, 1-butene, 1-hexene and 1-octene. In one embodiment, the interpolymer is an ethylene/α-olefin/diene terpolymer. In one embodiment, the α-olefin, of the terpolymer is propylene, and in one embodiment, the diene of the terpolymer is 5-ethylidene-2-norbornene (ENB).

### DESCRIPTION OF THE PREFERRED EMBODIMENT

All references to the Periodic Table of the Elements refer to the Periodic Table of the Elements published and copyrighted by CRC Press, Inc., 2003. Also, any references to a Group or Groups shall be to the Group or Groups reflected in this Periodic Table of the Elements using the IUPAC system for numbering groups. Unless stated to the contrary, implicit from the context, or customary in the art, all parts and percents are based on weight and all test methods are current as of the filing date of this disclosure.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, temperature, etc., is from 100 to 1,000, it is intended that all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the ratio of boron to aluminum, the concentrations of catalyst and components in the polymerization mixture, and various process parameters.

The terms "comprising", "including", "having" and their derivatives are not intended to exclude the presence of any additional component, step or procedure, whether or not the same is specifically disclosed. In order to avoid any doubt, all compositions claimed through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

As used with respect to a chemical compound, unless specifically indicated otherwise, the singular includes all isomeric forms and vice versa (for example, "hexane", includes all isomers of hexane individually or collectively). The terms "compound" and "complex" are used interchangeably to refer to organic-, inorganic- and organometal compounds. The term, "atom" refers to the smallest constituent of an element regardless of ionic state, that is, whether or not the same bears a charge or partial charge or is bonded to another atom. The term "amorphous" refers to a polymer lacking a crystalline melting point as determined by differential scanning calorimetry (DSC) or equivalent technique.

"Cable," "power cable," and like terms means at least one wire or optical fiber within a protective jacket or sheath. "Sheath" is a generic term and as used in relation to cables, it includes insulation coverings or layers, protective jackets and the like. Typically, a cable is two or more wires or optical fibers bound together in a common protective jacket. The individual wires or fibers inside the jacket may be bare, covered or insulated. Combination cables may contain both electrical wires and optical fibers. The cable can be designed for low, medium, high and extra high voltage applications. Extra high voltage cable means cable rated to carry 161 or more kiloVolts (kV). High voltage cable means cable rated to carry voltages of greater than or equal to (≥) 36 kV and less than or equal to (≤) 160 kV. Medium voltage cable means cable rated to carry voltages of ≥6 to <36 kV. Low voltage cable means cable rated to carry voltages of <6 kV. Typical cable designs are illustrated in USP 5,246,783, 6,496,629 and 6,714,707.

"Polymer" means a large molecule (macromolecule) composed of repeating structural units typically connected by covalent chemical bonds. Polymers are prepared by reacting (polymerizing) monomers, whether of the same or a different type, with one another. The generic term "polymer" embraces the term homopolymer, usually employed to refer to polymers prepared from only one type of monomer, and the term interpolymer as defined below. It also embraces all forms of interpolymers, e.g., random, block, homogeneous, heterogeneous, branched, linear, etc. The terms "ethylene/α-olefin polymer" and "propylene/α-olefin polymer" are indicative of interpolymers as described below.

"Interpolymer" means a polymer prepared by the polymerization of at least two different monomers. This generic term includes copolymers, employed to refer to polymers prepared from two different monomers, and polymers prepared from more than two different monomers, e.g., terpolymers, tetrapolymers, etc.

"Olefin-based polymer", "olefin-based interpolymer", "olefinic polymer", "olefinic interpolymer", "polyolefin" and like terms mean a polymer comprising, in polymerized form, a majority weight percent of an olefin, e.g., ethylene or propylene, based on the weight of the polymer. "Ethylene-based polymer" and like terms mean a polymer comprising in polymerized from a majority weight percent of ethylene based on the weight of the polymer. "Ethylene/α-olefin interpolymer" and like terms mean an interpolymer comprising, in polymerized form, a majority weight percent of ethylene based on the weight of the interpolymer, and an α-olefin. "Ethylene/α-olefin copolymer" and like terms mean a copolymer comprising, in polymerized form, a majority weight percent ethylene based on the weight of the copolymer, and an α-olefin. Units derived from only two monomers, i.e., ethylene and the α-olefin, are present in the copolymer.

"Blend," "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art.

"Composition" and like terms mean a mixture or blend of two or more components. In the context of a mix or blend of materials from which a cable sheath or other article of manufacture is fabricated, the composition includes all the components of the mix, e.g., polymer(s), filler and any other additives such as cure catalysts, anti-oxidants, flame retardants and the like.

### Olefin-Based Polymer

Monomers usefully polymerized according to the present invention include, for example, ethylenically unsaturated monomers, conjugated or nonconjugated dienes, polyenes, etc. Preferred monomers include the C₂-C₂₀, preferably C₂-C₁₂ and more preferably C₂-C₁₀, α-olefins, especially ethylene (considered an α-olefin for purposes of this invention), propene, isobutylene, 1-butene, 1-hexene, 4-methyl-1-pentene, and 1-octene, and the dienes 5-ethylidene-2-norbornene (ENB) and piperylene. Other useful but less preferred monomers include styrene, halo- or alkyl substituted styrenes, tetrafluoroethylene, vinylbenzocyclobutene, 1,4-hexadiene, 1,5-hexadiene, 1,7-octadiene, 4-vinylcyclohexene, vinylcyclohexane, 2,5-norbornadiene, 1,3-pentadiene, 1,4-pentadiene, 1,3-butadiene, cyclopentene, cyclohexene, cyclooctene, isoprene and naphthenics.

"Linear" means that the polymer does not have long chain branching. That is, the polymer chains comprising the bulk linear polymer have an absence of long chain branching, as for example, the traditional linear low density polyethylene polymers or linear high density polyethylene polymers made using Ziegler-Natta catalyzed polymerization processes (e.g., USP 4,076,698), sometimes called heterogeneously branched polymers. The term "linear" does not refer to bulk high pressure, branched polyethylene, ethylene/vinyl acetate copolymers, or ethylene/vinyl alcohol copolymers which are known to those skilled in the art to have numerous long chain branches. The term "linear" also refers to polymers made using uniform branching distribution polymerization processes, sometimes called homogeneously branched polymers, including polymers having a narrow polydispersity or molecular weight distribution (MWD, e.g. 2-4) made using single site catalysts. Such uniformly branched or homogeneously branched polymers include those made as described in USP 3,645,992 and those made using single site catalysts in a batch reactor having relatively high ethylene concentrations (as described in USP 5,026,798 or in USP 5,055,438 or those made using CGC in a batch reactor also having relatively high olefin concentrations (as described in USP 5,064,802 or in EP 0 416 815). The uniformly branched/homogeneous polymers are those polymers in which the comonomer is randomly distributed within a given interpolymer molecule or chain, and in which all of the interpolymer molecules have the same or substantially the same ethylene/comonomer ratio.

While the olefin-based interpolymers useful in the practice of this invention include a wide array of interpolymers, e.g., ethylene-based polymers, propylene-based polymers, butene-based polymers, etc., typically and preferably these interpolymers are ethylene-based, i.e., comprise >50, typically >60 and more typically >80, weight percent (wt%) units derived from ethylene. The typical comonomers of the ethylene-based polymers include propylene, 1-butene, 1-hexene and 1-octene, and typical ethylene/α-olefin copolymers include ethylene/propylene, ethylene/butene, ethylene/hexene and ethylene/octene copolymers. Other ethylene interpolymers include those comprising units derived from two or more comonomers and/or diene monomers, e.g., ethylene/propylene/butene terpolymer, ethylene/propylene/octene terpolymer, ethylene/propylene/butadiene terpolymer, ethylene/propylene/ENB terpolymer and ethylene/propylene/ENB/1,4-hexadiene tetrapolymer.

The preferred ethylene interpolymers used in the practice of this invention are the homogeneously branched, substantially linear ethylene copolymers which means that the bulk polymer is substituted, on average, with at least 0.01 long chain branches (LCB) per 1000 total carbons (including both backbone and branch carbons). The maximum number of LCBs per 1000 total carbons can vary but in the context of this invention, interpolymers having a higher number of LCBs per 1000 total carbon atoms are preferred over interpolymers having fewer LCBs per 1000 total carbon atoms. Typically, the maximum number of LCBs per 1000 carbon atoms (including both backbone and branch carbons) is three. For purposes of this invention, homogeneously branched, substantially linear ethylene copolymers do not include low density polyethylene (LDPE), usually made by a high pressure process.

The terms "backbone", "chain", "branch" and the like are used in reference to discrete molecules. The term "bulk polymer" refers, in the conventional sense, to the polymer that results from a polymerization process, i.e., it refers in the aggregate to all the molecules formed during polymerization. For substantially linear polymers, not all molecules have long chain branching, but a sufficient amount do have such branching that the average LCB content of the bulk polymer positively affects the melt rheology (i.e., the melt fracture properties). For a polymer to be a "substantially linear" polymer, the bulk polymer must have at least enough molecules with long chain branching such that the average long chain branching in the bulk polymer is at least an average of 0.01 long chain branches/1000 total carbons.

Long chain branching is defined as a chain length greater than that resulting from the incorporation of one comonomer into the polymer backbone. In contrast, short chain branching (SCB) is defined as the chain length that results from the incorporation of one monomer into the polymer backbone. For example, an ethylene/1-octene homogeneously branched, substantially linear polymer has backbones with long chain branches of at least seven carbons in length, but these backbones also have short chain branches of only six carbons in length (resulting from pendant hexyl groups), while an ethylene/1-hexene homogeneously branched, substantially linear polymer has long chain branches of at least five carbons in length but short chain branches of only four carbons in length (resulting from pendant butyl groups).

USP 4,500,648 teaches that long chain branching frequency can be represented by the equation LCB=b/Mw wherein b is the weight average number of long chain branches per molecule and Mw is the weight average molecular weight. The molecular weight averages and the long chain branching characteristics are determined by gel permeation chromatography and intrinsic viscosity methods.

Specific examples of olefin-based polymers that can be made and/or are useful in the practice of this invention include very low density polyethylene (VLDPE) (e.g., FLEXOMER® ethylene/1-hexene polymers made by The Dow Chemical Company), homogeneously branched, linear ethylene/α-olefin copolymers (e.g. TAFMER® by Mitsui Petrochemicals Company Limited and EXACT® by Exxon Chemical Company), and homogeneously branched, substantially linear ethylene/α-olefin polymers (e.g., AFFINITY® and ENGAGE® polymers and NORDEL® IP rubbers are all available from The Dow Chemical Company). The more preferred olefin-based polymers are the homogeneously branched linear and homogeneously branched, substantially linear ethylene-based interpolymers, and more preferably ethylene/α-olefin copolymers. The homogeneously branched, substantially linear ethylene interpolymers are more fully described in USP 5,272,236, 5,278,272 and 5,986,028.

The olefin-based polymers of this category of thermoplastic polymers also include propylene, butene and other alkene-based copolymers, e.g., copolymers comprising a majority weight percent of units derived from propylene and a minority of units derived from another α-olefin (including ethylene) based on the weight of the copolymer. Exemplary propylene-based polymers (majority wt% polymerized propylene based on the weight of the polymer) include the VISTAMAXX® polymers available from ExxonMobil Chemical Company.

The olefin based polymers, particularly the ethylene-based polymers, useful in the practice of this invention typically have a density of less than 0.965, preferably less than 0.93, grams per cubic centimeter (g/cm³). The ethylene-based polymers, and preferably the ethylene/α-olefin interpolymers or ethylene/ α-olefin copolymers, typically have a density greater than 0.85, preferably greater than 0.86, g/cm³. Density is measured by the procedure of ASTM D-792. Generally, the greater the α-olefin content of the interpolymer, the lower the density and the more amorphous the interpolymer. Low density olefin-based interpolymers are generally characterized as semi-crystalline, flexible and having good optical properties, e.g., high transmission of visible and UV-light and low haze.

The ethylene-based polymers, and preferably the ethylene/α-olefin interpolymers or ethylene/α-olefin copolymers, useful in the practice of this invention typically have a melt index greater than 0.10 and preferably greater than 1 gram per 10 minutes (g/10 min). The ethylene-based polymers, and preferably the ethylene/α-olefin interpolymers or ethylene/α-olefin copolymers, typically have a melt index of less than 500 and preferably of less than 100, g/10 min. Melt index is measured by the procedure of ASTM D-1238 (190°C/2.16 kg).

Blends of any of the above olefin-based polymers can also be used in this invention, and the polymers can be blended or diluted with one or more polymers other than an olefin-based polymer to the extent that, in a preferred mode, the olefin-based polymers of this invention constitute at least 50, preferably at least 75 and more preferably at least 80, weight percent of the total polymer components of the blend.

### Catalyst

Suitable catalysts for use in this invention include metallocenes and CGCs. The catalyst systems for making homogeneously branched, substantially linear olefin-based interpolymers, particularly homogeneously branched substantially linear ethylene-based interpolymers, comprise constrained geometry complexes in combination with an at least one activating cocatalyst containing a boron atom and at least one activating cocatalyst containing an aluminum atom. Examples of such constrained geometry complexes, methods for their preparation and for their activation are disclosed USP 5,374,696, 5,055,438, 5,057,475, 5,096,867, 5,064,802, 5,132,380, 5,272,236, 5,278,272 and 6,025,448 and WO 98/49212. Representative constrained geometry complexes include (t-butylamido) dimethyl (tetramethylcyclopentadienyl) silane titanium 1,3-pentadiene and (t-butylamido) dimethyl (η5-2-methyl-s-indacen-1-yl) silane titanium 1,3-pentadiene.

The complexes are rendered catalytically active by combining them with an activating cocatalyst. Suitable aluminum-containing activating cocatalysts (sometimes referred to as an impurity scavenger) include polymeric or oligomeric alumoxanes, especially methylalumoxane, tri-isobutyl aluminum modified methylalumoxane, or isobutylalumoxane, and neutral Lewis acids, such as C₁₋₃₀ hydrocarbyl-substituted Group 13 compounds, especially tri(hydrocarbyl)-aluminum and its halogenated (including perhalogenated) derivatives, having from 1 to 10 carbon atoms in each hydrocarbyl or halogenated hydrocarbyl group.

Suitable boron-containing activating cocatalysts include tri(hydrocarbyl)boron compounds and its halogenated (including perhalogenated) derivatives having from 1 to 10 carbon atoms in each hydrocarbyl or halogenated hydrocarbyl group, more especially perfluorinated tri(aryl)boron compounds, and most especially tris (pentafluorophenyl) borane ("FAB").

These activating cocatalysts are well known in the art, and are taught with respect to different metal complexes in EP-A-277,003, EP-A-468,651, EP-A-520,732 and EP-A-520,732 and USP 5,153,157 and 5,064,802.

Combinations of the following: (a) neutral Lewis acids, especially the combination of a trialkyl aluminum compound having from 1 to 4 carbon atoms in each alkyl group and a halogenated tri(hydrocarbyl)boron compound having from 1 to 20 carbon atoms in each hydrocarbyl group, especially FAB, (b) further combinations of such neutral Lewis acid mixtures with a polymeric or oligomeric alumoxane, and (c) combinations of a single neutral Lewis acid, especially FAB with a polymeric or oligomeric alumoxane, are especially desirable as activating cocatalysts. Preferred molar ratios of Group 4 metal complex:FAB:alumoxane are from 1:1:1 to 1:5:20, more preferably from 1:1:1.5 to 1:5:10. In the practice of this invention, the molar ratio of boron to aluminum is less than 1, preferably less than 0.95 and more preferably less than 0.9.

In catalyst systems that use a combination of FAB and alumoxane (e.g., modified methyl alumoxane or MMAO-3A) activating cocatalysts, a reversible equilibrium substitution reaction can occur between the two cocatalysts that produce a fluorinated aryl aluminum and subsequent ionic compounds that reduce the dielectric properties of the polymer. This fluorinated aryl aluminum formation reaction is increased, and dielectric properties further reduced, by increasing the FAB to MMAO-3A molar ratio in excess of the 1:1 stoichiometric level (excess of FAB). The reaction is decreased and the dielectric properties improved, however, by decreasing the FAB to MMAO-3A molar ratio to below the 1:1 the stoichiometric level.

The catalyst system used to make the polymers used in the practice of the present invention may be prepared as a homogeneous catalyst by adding the requisite components to a solvent used in a solution polymerization reaction. The catalyst system may also be prepared and employed as a heterogeneous catalyst by adsorbing the requisite components on a catalyst support material such as silica gel or other suitable inorganic support material. When prepared in heterogeneous or supported form, silica is the preferred support material. The heterogeneous form of the catalyst system is employed in a slurry polymerization. As a practical limitation, slurry polymerization takes place in liquid diluents in which the polymer product is substantially insoluble. Preferably, the diluent for slurry polymerization is one or more C₁₋₅ hydrocarbons. If desired, saturated hydrocarbons such as ethane, propane or butane, may be used in whole or part as the diluent. Likewise the α-olefin monomer or a mixture of different α-olefin monomers may be used in whole or part as the diluent. Most preferably the diluent comprises, in at least major part, the α-olefin monomer or monomers to be polymerized.

As suggested above, suspension, solution, slurry, gas phase, solid state powder polymerization or other process condition may be employed as desired. The solution and slurry processes are preferred. A support, especially silica or a polymer (especially poly(tetrafluoroethylene) or a polyolefin), may be employed, and desirably is employed when the catalysts are used in a gas phase polymerization process. The support is employed in known amounts and in known manners. In most polymerization reactions, the molar ratio of catalyst to polymerizable compounds is from 10⁻¹²:1 to 10⁻¹:1, more preferably from 10⁻⁹:1 to 10⁻⁵:1.

In general, polymerization is accomplished at conditions well known in the art, for example, Ziegler-Natta or Kaminsky-Sinn type polymerization reactions, that is, temperatures from 0-250°C, preferably 30 to 200°C, and pressures from atmospheric to 10,000 atmospheres.

Polymerization may occur in either a batch, semi-continuous or continuous process. The gas phase process is preferably a continuous process in which a continuous supply of reactants, catalyst, diluents and the like are supplied to the reaction zone of the reactor, and products, by-products, unreacted reactants and the like are continuously removed from the reaction zone of the reactor, to provide a steady-state environment on the macro scale in the reaction zone of the reactor. Gas phase polymerization can be performed in a stirred or fluidized bed of catalyst and inert and/or product particles in a pressure vessel adapted to permit the separation of product particles from unreacted gases. Ethylene, comonomer, hydrogen and an inert diluent gas such as nitrogen can be introduced or recirculated so as to maintain the particles at a temperature of 50-120°C. Triethylaluminum and/or other similar compounds may be added, as needed, as a scavenger of water, oxygen and/or other impurities. After polymerization and deactivation of the catalyst, the product polymer can be recovered by any suitable means.

The solution phase process is also preferably a continuous process, and it employs a solvent for the respective components of the reaction. Preferred solvents include mineral oils and the various hydrocarbons that are liquid at reaction temperatures. Illustrative examples of useful solvents include alkanes such as pentane, iso-pentane, hexane, heptane, octane and nonane, as well as mixtures of alkanes including kerosene and Isopar E^{tm} (available from Exxon Chemicals Inc.), cycloalkanes such as cyclopentane and cyclohexane, and aromatics such as benzene, toluene, xylene, ethylbenzene and diethylbenzene. The polymerization can be preformed in a solution reactor of any design, e.g., stirred-tank, dual-loop, etc., and the reactor can be connected with one or more other reactors in series or in parallel.

The polymers utilized in the practice of this invention are utilized in known ways using know equipment and procedures. The polymers may be crosslinked chemically or with radiation. Known peroxides, e.g., dicumyl peroxide, and azides (e.g., bis-sulfonyl azide) are suitable crosslinking agents.

While the polymer used in the practice of this invention can be used to construct any sheath or number of sheaths, of the cable, e.g., an insulation sheath, a shield sheath, a protective jacket, etc., typically and preferably it used to construct an insulation sheath due to its desirable dielectric properties. One measure of the dielectric property of a polymer is its dissipation factor (DF).

In electrical insulating applications, electric power is dissipated in all dielectric materials in the form of heat. The DF is the ratio of the real, in-phase power to the reactive, out-of-phase power. It is a measure of the hysteresis in charging and discharging a dielectric. DF is a measure of the conversion of real power to reactive power, shown as heat by electron or ion flow, and by dipole rotation. DF is expressed as the ratio of the resistive power loss (Ir) to the capacitive power (Ic), and it is equal to the tangent of the loss angle sigma (δ) as shown in Figure 1. Theta (θ) is the phase angle in Figure 1. Testing is conducted by ASTM D150-98 (50 mil plaque, 2kV, 1 Newton per square centimeter (N/cm²)) at 130°C and reported in radians. The lower the reported DF in radians, the better the dielectric (i.e., insulation) properties of the polymer. For medium and high voltage applications, the polymers used to make the insulation sheaths of the cables of this invention have a DF of less than 0.05, preferably less than 0.002 and more preferably less than 0.001, radian.

The polymer may be used neat or in combination with one or more additives. One common additive is filler. Examples of fillers include, but are not limited to, clays, precipitated silica and silicates, fumed silica calcium carbonate and ground minerals. If filled, the sheath should not be filled past that level that would cause undue degradation of the electrical and/or mechanical properties of the polymer. Generally, for that reason, fillers are typically used in amounts ranging from 0.01 to 70, preferably less than 50, weight percent (wt%) based on the weight of the composition, i.e., polymer plus additives.

Other additives include, but are not limited to, antioxidants, curing agents, cross linking co-agents, boosters and retardants, processing aids, coupling agents, ultraviolet absorbers or stabilizers, antistatic agents, nucleating agents, slip agents, plasticizers, lubricants, viscosity control agents, tackifiers, anti-blocking agents, surfactants, extender oils, acid scavengers, and metal deactivators. These other additives can typically be used, if used at all, in amounts generally known in the art, e.g., ranging from 0.01 to 10 wt% based on the weight of the composition, i.e., polymer plus additives.

Examples of antioxidants include: hindered phenols such as tetrakis[methylene(3,5-di-tert-butyl-4-hydroxyhydro-cinnamate)] methane; bis[(beta-(3, 5-ditert-butyl-4-hydroxybenzyl)-methylcarboxyethyl)]sulphide, 4,4'-thiobis(2-methyl-6-tert-butylphenel), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; polymerized 2,2,4-trimethyl-1,2-dihydroquinoline, n,n'-bis(1,4-dimethylpentyl-p-phenylenediamine), alkylated diphenylamines, 4,4'-bis(alpha, alpha-demthylbenyl)diphenylamine, diphenyl-p-phenylenediamine, mixed di-aryl-p-phenylenediamines, and other hindered amine antidegradants or stabilizers. Antioxidants can be used in amounts of 0.1 to 5 wt% based on the weight of the composition.

Examples of curing agents include: dicumyl peroxide; bis(alpha-t-butyl peroxyisopropyl)benzene; isopropylcumyl t-butyl peroxide; t-butylcumylperoxide; di-t-butyl peroxide; 2,5-bis(t-butylperoxy)2,5-dimethylhexane; 2,5-bis(t-butylperoxy)2,5-dimethylhexyne-3; 1,1-bis(t-butylperoxy)3,3,5-trimethylcyclohexane; isopropylcumyl cumylperoxide; di(isopropylcumyl) peroxide; or mixtures thereof. Peroxide curing agents can be used in amounts of 0.1 to 5 wt% based on the weight of the composition. Various other known curing co-agents, boosters, and retarders, can be used, such as triallyl isocyanurate; ethyoxylated bisphenol A dimethacrylate; α-methyl styrene dimer; and other co-agents described in USP 5,346,961 and 4,018,852.

Examples of processing aids include but are not limited to metal salts of carboxylic acids such as zinc stearate or calcium stearate; fatty acids such as stearic acid, oleic acid, or erucic acid; fatty amides such as stearamide, oleamide, erucamide, or n,n'-ethylenebisstearamide; polyethylene wax; oxidized polyethylene wax; polymers of ethylene oxide; copolymers of ethylene oxide and propylene oxide; vegetable waxes; petroleum waxes; non ionic surfactants; and polysiloxanes. Processing aids are typically used in amounts of 0.05 to 5 wt% based on the weight of the composition.

All of the components of the compositions utilized in the present invention are usually blended or compounded together prior to their introduction into an extrusion device from which they are to be extruded onto an electrical conductor. The polymer and the other additives and fillers may be blended together by any of the techniques used in the art to blend and compound such mixtures to homogeneous masses. Examples of compounding equipment are internal batch mixers, such as a Banbury™ or Bolling™ internal mixer. Alternatively, continuous single, or twin screw, mixers can be used, such as Farrel™ continuous mixer, a Werner and Pfleiderer™ twin screw mixer, or a Buss™ kneading continuous extruder. The type of mixer utilized, and the operating conditions of the mixer, will affect properties of a semiconducting material such as viscosity, volume resistivity, and extruded surface smoothness.

After the various components of the composition to be utilized are uniformly admixed and blended together, they are further processed to fabricate the devices of the present invention. Prior art methods for fabricating polymer insulated cable and wire are well known, and fabrication of the device of the present invention may generally be accomplished any of the various extrusion methods.

In a typical extrusion method, an optionally heated conducting core to be coated is pulled through a heated extrusion die, generally a cross-head die, in which a layer of melted polymer is applied to the conducting core. Upon exiting the die, the conducting core with the applied polymer layer is passed through a cooling section, generally an elongated cooling bath, to harden. Multiple polymer layers may be applied by consecutive extrusion steps in which an additional layer is added in each step, or with the proper type of die, multiple polymer layers may be applied simultaneously.

One description of a conventional extruder can be found in USP 4,857,600. Another example of an extruder can be found in USP 5,575,965. The typical extruder has a hopper at its upstream end and a die at its downstream end. The hopper feeds into a barrel which contains a screw. At the downstream end, between the end of the screw and the die, there is a screen pack and a breaker plate. The screw portion of the extruder is considered to be divided up into three sections, the feed section, the compression section, and the metering section, and two zones, the back-heat zone and the front-heat zone; the sections and zones running from upstream to downstream. Alternatively, multiple heating zones (more than two) run along the axis from upstream to downstream. If the extruder has more than one barrel, the barrels are connected in series. The length to diameter ratio of each barrel is in the range of 15:1 to 30:1. In wire coating where the polymeric insulation is crosslinked after extrusion, the cable often passes immediately into a heated vulcanization zone downstream of the extrusion die. The heated cure zone can be maintained at a temperature in the range of 200-350°C, preferably in the range of 170-250°C. The heated zone can be heated by pressurized steam or inductively heated pressurized nitrogen gas.

The conductor of the cable of the present invention generally comprises any suitable electrically conducting material, although generally electrically conducting metals are utilized. Preferably, the metals utilized are copper or aluminum. In power transmission, aluminum conductor/steel reinforcement (ACSR) cable, aluminum conductor/aluminum reinforcement (ACAR) cable, or aluminum cable is generally preferred.

### EXPERIMENTAL

Homogeneously branched, substantially linear ethylene/1-butene copolymer (melt index of 5 and a density of 0.8640 grams per cubic centimeter) is prepared using constrained geometry catalyst system in a solution-phase reactor. The catalyst system comprises the metal complex (t-butylamido) dimethyl (η-5-2-methyl-s-indacen-1-yl) silane titanium 1,3-pentadiene and cocatalysts tris(pentafluorophenyl) borane (FAB) and modified methyl aluminoxane (MMAO, available from Akzo Chemical). The reactants, feed ratios and operating conditions are kept essentially the same over a series of different runs except that the molar ratio of boron metal in FAB to the aluminum metal in MMAO is allowed to vary.

**TABLE**

| Effect of B:A1 Metal Ratio on the DF of Ethylene/1-Butene Copolymers | | |
|---|---|---|
| Made Using CG Catalysis | | |
| **Run** | **B:Al Ratio** | **DF Radian** |
| **1** | 1.438 | 0.04979 |
| **2** | 1.045 | 0.02113 |
| **3** | 1 | 0.01205 |
| **4** | 0.881 | 0.0096 |
| **5** | 0.8 | 0.003 |
| **6** | 0.861 | 0.00698 |
| **7** | 0.999 | 0.00586 |

As the data of the Table shows, CGC ethylene copolymers having DF values acceptable for medium voltage cable applications (Runs 3-7) can be produced if the molar ratio of B:Al metal in the CGC is maintained at 1 or less. Ethylene copolymers with a DF value of greater than 0.05 radians, measured at 130°C, are generally considered not acceptable for use as an insulation sheath in medium voltage cable applications.

Although the invention has been described in considerable detail by the preceding specification, this detail is for the purpose of illustration and is not to be construed as a limitation upon the following appended claims.

## Claims

1. A medium voltage cable comprising a sheath, the sheath comprising an olefin-based polymer made with a constrained geometry catalyst (CGC) activated with a boron-containing cocatalyst and aluminium-containing cocatalyst in which the olefin based polymer comprises residual boron and aluminium atoms at a molar ratio of boron to aluminium of less than 1.

2. The cable of Claim 1 in which the CGC comprises a metal coordination complex and the two cocatalysts present in an amount such that the boron and aluminium are present at a B:Al molar ratio of less than one.

3. The cable of Claim 2 in which the boron-containing activating cocatalyst further comprises a fluoride moiety.

4. The cable of Claim 3 in which the metal coordination complex is at least one of (t-butylamido) dimethyl (tetramethylcyclopentadienyl) silane titanium 1,3-pentadiene and (t-butylamido) dimethyl (η5-2-methyl-s-indacen-1-yl) silane titanium 1,3-pentadiene.

5. The cable of Claim 4 in which the boron-containing activating cocatalyst is a tri(hydrocarbyl)boron compound, or a halogenated derivative of the same, of 1 to 10 carbon atoms in each hydrocarbyl or halogenated hydrocarbyl group.

6. The cable of Claim 5 in which the aluminium-containing activating cocatalyst is a polymeric or oligomeric alumoxane.

7. The cable of any of Claims 1-6 in which the olefin-based polymer is an ethylene/α-olefin copolymer.

8. The cable of Claim 7 in which the ethylene/α-olefin copolymer is a homogeneously branched, substantially linear ethylene/α-olefin interpolymer.

9. The cable of any of Claim 8 in which the sheath is an insulation sheath.

10. The cable of Claim 9 in which the molar ratio of boron to aluminium atoms is less than 0.9.

## Patentansprüche

1. Ein Mittelspannungskabel, das eine Ummantelung beinhaltet, wobei die Ummantelung ein olefinbasiertes Polymer beinhaltet, das mit einem Katalysator mit eingeschränkter Geometrie (CGC), der mit einem borhaltigen Co-Katalysator und einem aluminiumhaltigen Co-Katalysator aktiviert ist, hergestellt ist, wobei das olefinbasierte Polymer zurückbleibende Bor- und Aluminiumatome in einem Molverhältnis von Bor zu Aluminium von weniger als 1 beinhaltet.

2. Kabel gemäß Anspruch 1, wobei der CGC einen Metallkoordinationskomplex und die zwei Co-Katalysatoren, vorkommend in einer derartigen Menge, dass das Bor und das Aluminium in einem Molverhältnis B:Al von weniger als eins vorkommen, beinhaltet.

3. Kabel gemäß Anspruch 2, wobei der borhaltige Aktivierungs-Co-Katalysator ferner einen Flouridanteil beinhaltet.

4. Kabel gemäß Anspruch 3, wobei der Metallkoordinationskomplex mindestens eins von Folgendem ist: (t-Butylamido)dimethyl(tetramethylcyclopentadienyl)silantitan-1,3-pentadien und (t-Butylamido)dimethyl(η5-2-methyl-s-indacen-1-yl)silantitan-1,3-pentadien.

5. Kabel gemäß Anspruch 4, wobei der borhaltige Aktivierungs-Co-Katalysator eine Tri(hydrocarbyl)bor-Verbindung oder ein halogeniertes Derivat derselben ist, mit 1 bis 10 Kohlenstoffatomen in jeder Hydrocarbylgruppe oder halogenierten Hydrocarbylgruppe.

6. Kabel gemäß Anspruch 5, wobei der aluminiumhaltige Aktivierungs-Co-Katalysator ein polymeres oder oligomeres Alumoxan ist.

7. Kabel gemäß einem der Ansprüche 1-6, wobei das olefinbasierte Polymer ein Ethylen/α-Olefin-Copolymer ist.

8. Kabel gemäß Anspruch 7, wobei das Ethylen/α-Olefin-Copolymer ein homogen verzweigtes, im Wesentlichen lineares Ethylen/α-Olefin-Interpolymer ist.

9. Kabel gemäß einem von Anspruch 8, wobei die Ummantelung eine Isolationsummantelung ist.

10. Kabel gemäß Anspruch 9, wobei das Molverhältnis von Bor- zu Aluminiumatomen weniger als 0,9 beträgt.

## Revendications

1. Un câble moyenne tension comprenant une gaine, la gaine comprenant un polymère à base d'oléfine réalisé avec un catalyseur à géométrie contrainte (CGC) activé avec un cocatalyseur contenant du bore et un cocatalyseur contenant de l'aluminium dans lequel le polymère à base d'oléfine comprend des atomes de bore et d'aluminium résiduels à un rapport molaire entre bore et aluminium inférieur à 1.

2. Le câble de la revendication 1 dans lequel le CGC comprend un complexe métallique de coordination et les deux cocatalyseurs présents dans une quantité telle que le bore et l'aluminium sont présents à un rapport molaire B/Al inférieur à un.

3. Le câble de la revendication 2 dans lequel le cocatalyseur d'activation contenant du bore comprend en outre un groupement fluorure.

4. Le câble de la revendication 3 dans lequel le complexe métallique de coordination est au moins un complexe de (t-butylamido) diméthyl (tétraméthylcyclopentadiényl) silane titane 1,3-pentadiène et de (t-butylamido) diméthyl (η5-2-méthyl-s-indacen-1-yl) silane titane 1,3-pentadiène.

5. Le câble de la revendication 4 dans lequel le cocatalyseur d'activation contenant du bore est un composé de bore tri (hydrocarbyle), ou un dérivé halogéné de celui-ci, de 1 à 10 atomes de carbone dans chaque groupe hydrocarbyle ou hydrocarbyle halogéné.

6. Le câble de la revendication 5 dans lequel le cocatalyseur d'activation contenant de l'aluminium est un alumoxane polymérique ou oligomérique.

7. Le câble de n'importe lesquelles des revendications 1 à 6 dans lequel le polymère à base d'oléfine est un copolymère éthylène/α-oléfine.

8. Le câble de la revendication 7 dans lequel le copolymère éthylène/α-oléfine est un interpolymère éthylène/α-oléfine substantiellement linéaire, ramifié de façon homogène.

9. Le câble de n'importe lesquelles de la revendication 8 dans lequel la gaine est une gaine d'isolation.

10. Le câble de la revendication 9 dans lequel le rapport molaire entre les atomes de bore et d'aluminium est inférieur à 0,9.
